# EUROPÄISCHE PATENTANMELDUNG

(11) **EP 2 886 287 A1**
(43) Veröffentlichungstag der Anmeldung: **24.06.2015**
(21) Anmeldenummer: 13198963.4
(22) Anmeldetag: 20.12.2013
(51) Int. Cl.: B29C 45/14, B29K 705/00, B29L 31/30

(54) **Verfahren zur Herstellung von Hybridbauteilen**

(71) Anmelder: nolax AG, 6203 Sempach Station (CH)
(72) Erfinder: Vogler, Christian, 6274 Eschenbach (CH); Koch, David, 3007 Bern (CH); Traber, Bruno, 3110 Münsingen (CH)
(74) Vertreter: Hepp Wenger Ryffel AG

(57) **Zusammenfassung**

Die Erfindung betrifft ein Verfahren zur Herstellung von Hybridbauteilen (1) sowie die Verwendungen eines Pressstempels (11) und einer Haftschicht (21) zum Aufbringen auf ein Bauteil (2) bei der Herstellung von Hybridbauteilen (1). Auf diese Weise wird ein kosten- und zeiteffizientes Verfahren zur Herstellung von Hybridbauteilen (1) zur Verfügung gestellt.

## Beschreibung

Die Erfindung betrifft ein Verfahren zur Herstellung von Hybridbauteilen und die Verwendung eines Pressstempels und einer Klebefolie in der Herstellung von Hybridbauteilen.

Hybridbauteile aus Metall und Kunststoff leisten einen wesentlichen Beitrag zum automobilen Leichtbau. Hierbei wird ein tiefgezogenes und gelochtes Stahlblech in ein Spritzgiesswerkzeug eingelegt und mit einem geeigneten Kunststoff, beispielsweise Polyamid (PA6.6) mit Glasfaser, umspritzt. Dabei dringt eine Kunststoffschmelze durch eingestanzte Öffnungen des Blechs und bildet zwischen einer Formnestwand des Werkzeugs und einem eingelegten Metallteil einen Nietkopf. Auf diese Weise entsteht eine kraft- und formschlüssige Verbindung zwischen beiden Komponenten. Mit dem Anspritzen von rippenförmigen Verstärkungen und Versteifungen aus Kunststoff können dünnwandige Stahlkonstruktionen mit wenig zusätzlichem Gewicht stabilisiert werden. Zusätzlich zu den Versteifungsrippen bietet die Hybridtechnik die Möglichkeit, beliebige Zusatzfunktionen wie beispielsweise Befestigungselemente, Lagerstellen, Schnapphaken, Schraubverbindungen, Kabelklemmen, in einem Arbeitsgang zu integrieren. Dadurch ist es möglich, zeit- und kostenintensive Nachbearbeitungs- und Montageprozesse einzusparen. Um die Performance der Bauteile zu erhöhen, beschäftigt man sich bei der Entwicklung von Hybridbauteilen mit stoffschlüssigen Verbindungen von Metall und Kunststoff.

DE 103 26 995 A1 beschreibt eine solche stoffschlüssige Verbindung eines Verbundbauteils mit einer metallischen Schicht und wenigstens einer aus thermoplastischem Polymer bestehenden Schicht. Zwischen der metallischen Schicht und einer Kunststoffschicht ist eine Zwischenschicht vorgesehen, welche mittels eines Spritz-, Spritzguss- oder Pressverfahrens aufgetragen wird.

DE 103 61 096 beschreibt ebenfalls eine stoffschlüssige Verbindung eines Bauteils, welches bereichsweise aus Metall gefertigt ist. Das Metall ist dabei teilweise mit thermoplastischem Kunststoff umspritzt und eine oder mehrere Haftvermittlerschichten sind auf Teilen des Metalls ausgebildet. Diese sind mittels Lackieren aufgetragen.

An den vorgenannten Verfahren zur Herstellung von Hybridbauteilen ist nachteilig, dass die metallische Schicht mit einer Haftvermittlerschicht vorbeschichtet und anschliessend zwischengelagert werden muss, bevor eine Weiterverarbeitung erfolgt. Dies erfordert neben einer aufwendigen Logistik eine zeitliche Unterbrechung im Herstellungsprozess.

Des Weiteren weisen die bekannten Verfahren zur Herstellung von Hybridbauteilen, beispielsweise im Coil-Coating-Verfahren, Nachteile wie beispielsweise einen separaten Vorbeschichtungsprozess, einen erforderlichen Trocknungsprozess, lösungsmittelhaltige Systeme, mehrstufige Beschichtungsverfahren sowie nur vollflächige Beschichtungen auf.

Bei Sprühauftragsverfahren sind meist zusätzliche Verfahrensschritte notwendig und eine Beschichtung mit Aussparung ist nur mittels aufwendiger Maskierungen des Bauteils möglich. In der Regel ergibt sich eine Akkumulation des Haftvermittlers an Ecken und Kanten des Bauteils, was den Prozess ineffizient hinsichtlich des Materialeinsatzes macht.

Es ist daher Aufgabe der Erfindung, die Nachteile des Standes der Technik zu überwinden.

Insbesondere ist es Aufgabe der Erfindung ein Verfahren bereitzustellen, bei welchem eine stoffschlüssige Verbindung prozessintegriert erfolgt und somit ein Haftvermittler, beispielsweise eine Haftschicht, prozessintegriert aufgetragen wird.

Diese Aufgaben werden durch die in den unabhängigen Ansprüchen aufgeführten Merkmale gelöst.

Die Erfindung betrifft ein Verfahren zur Herstellung von Hybridbauteilen umfassend die Schritte:
- Bereitstellen eines insbesondere vorgeformten Bauteils, insbesondere Metallelements,
- Bereitstellen eines Werkzeugs, insbesondere eines Spritzgiesswerkzeugs,
- Bereitstellen mindestens einer Auftragseinheit, insbesondere eines Pressstempels,
- Bereitstellen mindestens einer Haftschicht, insbesondere einer Klebefolie, an der Auftragseinheit,
- Platzieren des insbesondere vorgeformten Bauteils in das Werkzeug,
- Aufheizen des Werkzeugs insbesondere mittels einer Temperiervorrichtung oder Aufheizen des Bauteils vor dem Platzieren in das Werkzeug,
- Andrücken der Haftschicht auf das insbesondere vorgeformte Bauteil,
- Schliessen des Werkzeugs,
- Einbringen eines Kunststoffes insbesondere einer oder mehrerer Kunststoffrippen 32 oder Kunststoffstreben, in das Werkzeug, insbesondere durch Spritzgiessen,
- Entnahme des Hybridbauteils (1) aus dem Werkzeug.

Auf diese Weise wird eine Haftschicht prozessintegriert auf das Bauteil, insbesondere das Metallelement, aufgetragen, so dass Vorbeschichtungsschritte des Bauteils und Trocknungsschritte der Haftschicht mit Zwischenlagerung hinfällig sind. Ebenso wird die Freisetzung von Lösungsmitteln in die Umgebung vermieden, da das Verfahren keine Trocknung erfordert. Vorteilhaft ist zudem, dass das Einbringen, insbesondere durch Spritzgiessen, des Kunststoffes unmittelbar nach Auftragen der Haftschicht erfolgt und somit der Herstellungsprozess eines Hybridbauteils optimiert und beschleunigt wird. Damit ist die Zulieferkette wesentlich verkürzt. Weitere Vorteile umfassen die einfache Umsetzung einer partiellen Beschichtung anhand des gewählten Profils der Haftschicht. Daraus resultieren vorteilhafte Bedingungen für eine Weiterverarbeitung wie beispielsweise ein Verschweissen in Aussparungsbereichen, ein Durchsetzfügen (Clinchen), Metall-Metall-Verklebungen unter Vermeidung doppelter Schichtdicken. Ebenso ist ein Auftragen von mehrschichtigen Haftschichten für unterschiedliche Substratkombinationen und von gleichmässigen Schichtdicken einfach realisierbar.

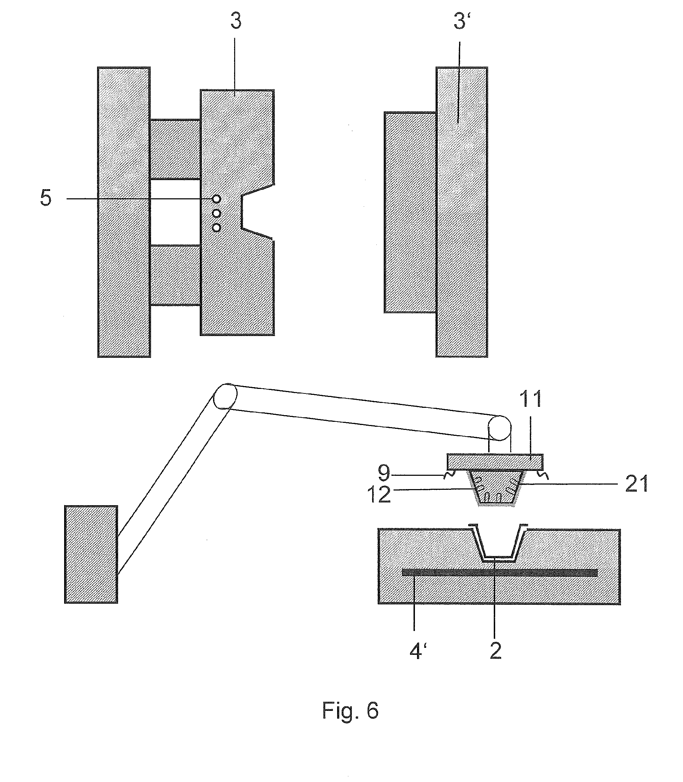

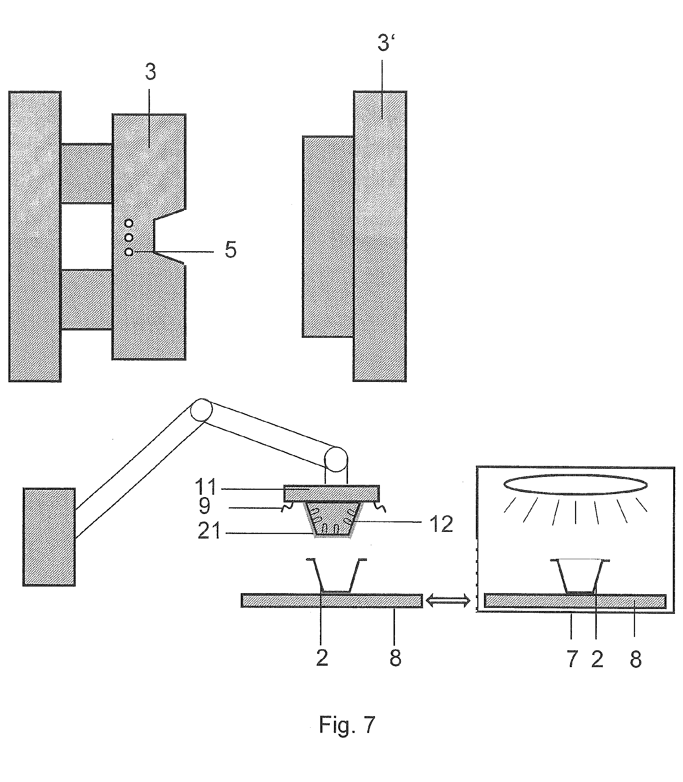

Unter einem Aufheizen des Werkzeugs insbesondere mittels einer Temperiervorrichtung vor dem Platzieren des insbesondere vorgeformten Bauteils versteht sich ein Aufheizen des Bauteils in einer von dem Werkzeug separierten Vorrichtung (die auch ein Werkzeug oder ein Teil davon sein kann) oder Heizelement. Im Anschluss wird das aufgeheizte und insbesondere vorgeformte Bauteil in das Werkzeug platziert. Eine separierte Vorrichtung ist in Figur 6 gezeigt und in der entsprechenden Figurenbeschreibung beschrieben. Ein separiertes Heizelement ist in Figur 7 in Form eines Heizofens gezeigt und in der entsprechenden Figurenbeschreibung beschrieben.

Eine Haftschicht, insbesondere eine Klebefolie, wird im Folgenden als klebbar *per* se oder klebbar nach einer Aktivierung, beispielsweise einem Aufheizen, verstanden.

Als Bauteil verstehen sich vorzugsweise Metallbleche, insbesondere Stahlbleche oder Aluminiumbleche. Ebenso sind vorzugsweise Kunststoff- oder Carbonelemente darunter zu verstehen.

Selbstverständliche können auch vorbehandelte insbesondere vorgeformte Bauteile verwendet werden. Dabei können anforderungsgemässe Beschichtungen wie beispielsweise KTL-Beschichtung,
anodische Oxidation, Beizen, Konversions- und
Passivierungsschichten (Alkaliphosphatierung,
Zinkphosphatierung, Eisenphos-phatierung, Manganphosphatierung, titan-, zirkon- und silan-basierte Konversionsschichten), Nano-Beschichtungen, elektrolytische Verzinkung, Feuerverzinkung, Korrosionsschutzprimer aufgetragen sein.

Die Verfahrensschritte Aufheizen des Werkzeugs, insbesondere mittels der Temperiervorrichtung, und Andrücken der Haftschicht auf das insbesondere vorgeformte Bauelelement, sind selbstverständlich in ihrer Abfolge austauschbar und zeitlich anpassbar. Damit können Eigenschaften der Haftschicht, wie beispielsweise Anschmelzeigenschaften, Haftentwicklung und/oder zeitlicher Verlauf einer Haftentwicklung, oder des Bauteils, wie beispielsweise Dicke und/oder Wärmeleitfähigkeit, berücksichtigt werden.

Die einstellbare Temperiervorrichtung, welche eine Heizeinheit und eine Kühleinheit umfasst, ermöglicht ein aktives Heizen und/oder Kühlen. Heizwiderstände können in einer Auflagefläche des Werkzeugs eingelassen sein. Damit ist das Werkzeug auf eine definierte Temperatur einstellbar. Dabei kann die Temperiervorrichtung ein insbesondere gepulstes kaltes Temperiermedium in Kombination mit einer elektrischen Widerstandsheizung, einem Heizstrahler, einem wassergekühltem Induktor aufweisen. Ebenso kann ein Induktor von insbesondere gepulstem kaltem Temperiermedium eingeschlossen sein. Alternativ können abwechselnd heisse und kalte Temperiermedien in einem Kreislaufsystem genutzt werden. Dabei können diese heissen und kalten Temperiermedien Kombination aus Wasser-Wasser, Öl-Öl, Dampf-Wasser aufweisen.

Durch ein Aufheizen des Werkzeugs auf eine definierte Temperatur wird ein Anhaften der Haftschicht am Bauteil ermöglicht, so dass ein kontrolliertes Auftragen der Haftschicht auf das Bauteil erfolgen kann.

Das Werkzeug kann weiter einen oder mehrere Temperatursensoren umfassen. Erfasste Temperaturwerte können für eine Regelung oder Steuerung des Verfahrens, insbesondere für die Temperatur im Werkzeug, berücksichtigt werden.

Das Auftragen des Kunststoffes insbesondere durch Hinterspritzen kann die Schritte Einspritzen, Nachdruck und Abkühlen umfassen. Alternativ kann der Kunststoff durch ein Pressverfahren, ein Strangablageverfahren, Extrusion, Schäumen oder Giessen eingetragen werden.

Das Verfahren ist nicht auf die Herstellung eines Hybridbauteils aus einer Kombination von Metall und Kunststoff beschränkt. Es sind auch Metall-Metall-, Carbon-Carbon-, Kunststoff-Kunststoff- oder Metall-Carbon-Hybridbauteile möglich. Diese Kombinationen werden in Pressverfahren, Schäumverfahren, Giessverfahren oder Strangablage/Extrusions-Verfahren realisiert. Auf diese Weise können inkompatible Werkstoffe, insbesondere inkompatible Kunststoffe, miteinander verbunden werden.

Die Haftschicht kann als zweidimensionale Kontur des dreidimensionalen insbesondere vorgeformten Bauteils bereitgestellt werden. Dabei kann das insbesondere vorgeformte Bauteil insbesondere mit mindestens einer oder mehreren Aussparungen ausgestaltet sein. Auf diese Weise sind weiterführende Verarbeitungsschritte wie beispielsweise Punktschweissen, Durchsetzfügen (Clinchen) in den Bereichen der Aussparungen der Haftschicht durchführbar.

Das insbesondere vorgeformte Bauteil kann mittels Stanzen, Biegen, Formen, Tiefziehen, Pressen, Schäumen, Giessen oder Strangablage/Extrusion hergestellt sein.

Das insbesondere vorgeformte Bauteil kann vorbehandelt, insbesondere entfettet werden. Auf diese Weise wird das Bauteil anforderungsgemäss und funktionsgemäss angepasst. Ein Vorbehandeln kann ein Auftragen insbesondere einer Primerschicht und/oder Plasmaschicht umfassen. Ebenso kann das insbesondere vorgeformte Bauteil Laser-vorbehandelt werden.

Der Pressstempel kann mindestens eine oder mehrere Vakuumbohrungen aufweisen, welche ein Ansaugen der Haftschicht ermöglichen. Unter Vakuumbohrungen verstehen sich dabei Aussparungen an einer Seite bzw. Fläche des Pressstempels. So lässt sich nach Auflegen des Pressstempels auf ein Element, beispielsweise eine Haftschicht, durch nachgeschaltete Mittel, wie beispielsweise eine Vakuumpumpe, ein Unterdruck innerhalb der Aussparungen aufbauen, was ein Anhaften des Elements, insbesondere der Haftschicht, am Pressstempel ermöglicht. Auf diese Wiese lässt sich ein Ansaugen, Auftragen und Entlassen eines Elements, insbesondere einer Haftschicht, steuern.

Ein Anhaften der Haftschicht an dem insbesondere vorgeformten Bauteil kann mittels temporärer Fixierung, insbesondere mittels elektrostatischer Anziehung oder einer Haftvorbeschichtung des insbesondere vorgeformten Bauteils, ermöglicht werden. Dabei weist eine Kontaktfläche zwischen dem Bauteil und der Haftschicht eine höhere Haftung als eine Kontaktfläche zwischen dem Pressstempel und der Haftschicht auf. Dadurch ist ein Anhaften der Haftschicht auf dem Bauteil ermöglicht. Unter einer Haftvorbeschichtung versteht sich eine auf das Bauelement vorgängig aufgetragene haftende Beschichtung, welche ein Anhaften der Haftschicht unterstützt.

Wird die Anhaftung der Haftschicht am Pressstempel durch einen angelegten Unterdruck vermittelt, so kann der Unterdruck reduziert werden und damit ein Anhaften der Haftschicht am Bauteil erfolgen. Ebenso kann ein Überdruck zum Entlassen des Filmes vom Stempel angelegt werden. Des Weiteren können auch federnd gelagerte Nadeln genutzt werden, welche die Haftschicht durchstossen. Auf diese Weise kann ebenso ein Handling und Übertrag erfolgen.

Während des Einbringens eines Kunststoffes kann das Werkzeug, insbesondere mittels der Temperiervorrichtung, temperiert, insbesondere auf eine definierte Temperatur eingestellt werden. Auf diese Weise kann das Einbringen des Kunststoffes, insbesondere hinsichtlich einer gleichmässigen Verteilung des eingetragenen Kunststoffes, optimiert werden. Ebenso kann die Temperiervorrichtung anforderungsgemäss gesteuert oder geregelt werden.

Das insbesondere vorgeformte Bauteil und/oder die Haftschicht können vor dem Eintragen eines Kunststoffes mittels Infrarot-Strahlung, Hochfrequenz-Strahlung oder Heissluft aufgeheizt werden. Das Bauteil kann falls metallische Komponenten enthaltend ebenso mittels Induktion temperiert werden. Auf diese Weise können beide Elemente auf eine optimale Temperatur betreffend eines Anhaftens der Haftschicht auf dem Bauteil eingestellt werden.

Die Klebeschicht kann auch metallische Bestandteile aufweisen. So ist die Klebeschicht mittels Induktion heizbar.

Die Haftschicht kann ein- oder mehrschichtig, bevorzugt drei- oder fünfschichtig, ausgestaltet sein. Auf diese Weise lassen sich gewünschte Eigenschaften in die Haftschicht einbringen. Diese Eigenschaften umfassen insbesondere unterschiedliche Hafteigenschaften, Widerstandseigenschaften, Fliesseigenschaften, Viskositäten, Schmelztemperaturen, Schmelztemperaturbereiche, Temperaturbeständigkeiten, Anfangsklebrigkeit ("Tack"),
Benetzungsverhalten.

Die Haftschicht kann insbesondere latent reaktive Gruppen aufweisen. Auf diese Weise ist eine zeitlich verzögerte Ausbildung einer stoffschlüssigen Verbindung ermöglicht.

Die Haftschicht kann auf einem Transferträger aufgetragen sein. Dabei kann ein Transferträger beispielsweise eine Transferfolie sein. Mittels eines Transferträgers insbesondere einer Transferfolie kann ein Anhaften der Haftschicht an dem Pressstempel verhindert werden. Der Transferträger fungiert als Trennschicht während des Pressvorganges. Vor dem Eintrag des Kunststoffes wird der Transferträger entfernt. Transferträger können aus Polyethylen, Polypropylen, Polyethylenterephthalat, Polyolefin,
Polyamid, PPA, Polyester, Polysiloxane/Silikone, PTFE, TPU, Cellulosehydrat/Cellophan, Celluloseacetat, Cellulose, Viskose, PBT, PC, ABS, PEEK, POM, ASA, SAN, PAN, PVC, PS gefertigt sein. Weitere Fertigungsmaterialien sind dem Fachmann bekannt. Generell kann der Transferträger aus thermoplastischen Kunststoffen und nicht-haftenden Materialien bestehen. Hierbei sind der Transferträger und die Haftschicht zueinander nicht haftend. Die Haftschicht haftet leicht am Transferträger, lässt sich aber einfach von diesem abziehen. So lässt sich der Transferträger nach dem Beschichtungsvorgang problemlos entfernen.

Die Haftschicht kann während des Herstellungsprozesses auf die Träger aufgetragen werden. Diese Träger können auch während des Herstellungsprozesses der Haftschicht mit hergestellt werden (Folienträger).

Transferträger aus silikonisiertem Papier eignen sich für ein Verfahren mit einem flächigen (2-D) Stempel.

Des Weiteren kann ein Vlies als Träger verwenden werden. Dieses verbleibt während des Eintrags des Kunststoffes im System und stellt eine Zwischenschicht zwischen Kunststoff und Klebeschicht dar.

Der Transferträger ist vorzugsweise elastisch ausgestaltet.

Die Haftschicht kann eine Schichtdicke von 1 bis 2000 µm, bevorzugt von 5 bis 1000 µm, besonders bevorzugt von 10 bis 500 µm, aufweisen. Bevorzugt ist die Haftschicht elastisch und resultiert beim Tiefziehen in einer gleichmässig verdünnten Haftschicht. Auf diese Weise ist die Haftschicht auf ein Bauteil auftragbar, welches anschliessend umgeformt, insbesondere tiefgezogen, wird.

Ebenso bevorzugt ist die Haftschicht mit Stanz- und/oder Schneidwerkzeugen anpassbar. Auf diese Weise lässt sich die Haftschicht anforderungsgemäss, insbesondere auf die Dimensionen eines Bauteils, anpassen.

Eine dem insbesondere vorgeformten Bauteil zugewandte Schicht der Haftschicht kann gefertigt sein mit Stoffen ausgewählt aus der Liste umfassend: Polyolefin, insbesondere in Kombination mit Maleinsäureanhydrid; Polyamid, insbesondere in Kombination mit Phenol; Polyurethan, insbesondere latent reaktives Polyurethan; Phenolharz, Polyester, insbesondere Co-Polyester; Ethylenvinylacetat, Ethylen-Vinylalkohol, Ionomere, Acrylate, Silane, Epoxide. Weitere gängige Kunststoffe sind dem Fachmann bekannt, damit ist die vorgenannte Liste an Stoffen nicht abschliessend. Damit weist die Schicht einen Schmelzbereich von 60 bis 250 °C, bevorzugt 80 bis 200 °C, besonders bevorzugt 100 bis 180°C, auf.

Eine dem Pressstempel zugewandte Schicht der Haftschicht kann gefertigt sein aus Stoffen ausgewählt aus der Liste umfassend Polyolefin, insbesondere in Kombination mit Maleinsäureanhydrid; Polyamid, insbesondere in Kombination mit Phenol, thermoplatisches Polyurethan (TPU), Polybutylenterephthalat (PBT), Polyphthalamide (PPA), Polycarbonat (PC), Acrylnitril-Butadien-Styrol (ABS), Polyetheretherketon (PEEK), Polyoxymethylen (POM), Acrylester-Styrol-Acrylnitril (ASA), Styrol-Acrylnitril (SAN). Weitere gängige Kunststoffe sind dem Fachmann bekannt, damit ist die vorgenannte Liste an Stoffen nicht abschliessend. Damit weist die Schicht einen Schmelzbereich von 80 bis 350°C, bevorzugt 100 bis 300 °C, besonders bevorzugt 110 bis 250°C, auf.

Eine dem insbesondere vorgeformten Bauteil zugewandte Schicht der Haftschicht kann eine derartige Haftung auf dem Bauteil aufweisen, dass die Haftschicht mit einer Aufdruckzeit von 0,1 bis 60 sec, bevorzugt 0,1 bis 30 sec, besonders bevorzugt 0,1 bis 15 sec und mit einem Druck von 0,001 bis 100 bar, bevorzugt 0,001 bis 80 bar, besonders bevorzugt 0,001 bis 50 bar auf das Bauteil transferiert werden kann.

Das hinterspritzte Hybridbauteil kann mit einem beschichteten Deckblech abgedeckt, insbesondere stoff- und formschlüssig verbunden werden. Das beschichtete Deckblech kann eine Haftschicht aufweisen und so mit dem Hybridbauteil einen Verbund insbesondere mittels einer Haftschicht-Haftschicht-Verklebung ausbilden. Auf diese Weise wird das Hybridbauteil abgedeckt bzw. weitere Elemente können mit dem Hybridbauteil insbesondere stoff- und formschlüssig verbunden werden. Selbstverständlich kann ein haftschichtfreies Deckblech auf das Hybridbauteil aufgebracht werden. Dabei erfolgt eine stoff- und formschlüssige Verbindung mittel der zuvor in das Bauteil eingebrachten Haftschicht.

Des Weiteren betrifft die Erfindung eine Verwendung eines Pressstempels zum Aufbringen einer Haftschicht auf ein Bauteil in der Herstellung eines Hybridbauteils, insbesondere in einem Verfahren wie vorstehend beschrieben. Auf diese Weise ist die Herstellung eines Hybridbauteils kosten- und zeiteffizient.

Die Erfindung betrifft weiter eine Verwendung einer Klebefolie zum Verbinden eines Kunststoffes mit einem Bauteil in der Herstellung eines Hybridbauteils, insbesondere in einem Verfahren wie vorstehend beschrieben.

Durch die Verwendung eines Pressstempels und/oder die Verwendung einer Haftschicht, insbesondere einer Klebefolie, ist die Herstellung eines Hybridbauteils kosten- und zeiteffizient.

Die Erfindung wird im Folgenden anhand von Abbildungen näher erläutert. Es zeigen:
Figur 1: Schematische Schnitte durch Hybridbauteile hergestellt mit dem erfindungsgemässen Verfahren;
Figur 2: Schematische Schnitte durch Hybridbauteile hergestellt mit dem erfindungsgemässen Verfahren;
Figur 3: Schematische Darstellung verschiedener Elemente für die Durchführung des erfindungsgemässen Verfahrens;
Figur 4: Schematische Darstellung eines erfindungsgemässen Verfahrens zur Herstellung eines Hybridbauteils;
Figur 5: Schematische Darstellung verschiedener Elemente für die Durchführung eines alternativen Verfahrens;
Figur 6: Schematische Darstellung verschiedener Elemente für die Durchführung eines alternativen Verfahrens mit einer positionierbaren, externen Wärmequelle;
Figur 7: Schematische Darstellung verschiedener Elemente für die Durchführung eines alternativen Verfahrens mit einem separaten Wärmeofen;
Figur 8: Schematische Darstellung verschiedener Elemente für die Durchführung eines alternativen Verfahrens zum Verschliessen eines Hybridbauteils;
Figur 9: Schematische Darstellung eines alternativen Verfahrens zum Verschliessen eines Hybridbauteils;
Figur 10: Schematische Darstellung eines alternativen Verfahrens zum Verschliessen eines Hybridbauteils.

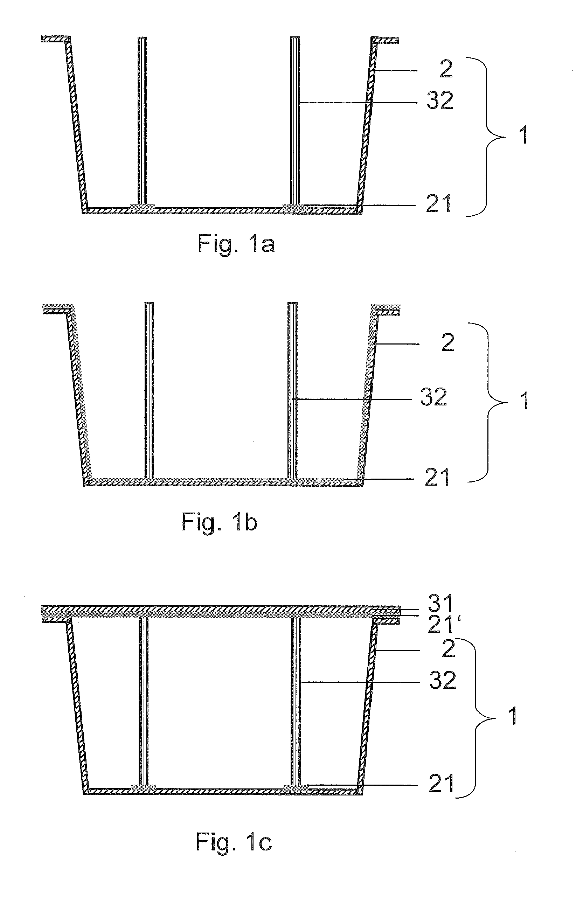

Figur 1 zeigt ein Hybridbauteil 1 umfassend ein Bauteil 2, eine Haftschicht 21, welche partiell ausgestaltet ist, sowie eine oder mehrere Kunststoffrippen 32 (Fig. 1a). Hierbei sind die eine oder mehreren Kunststoffrippen 32 mittel der Haftschicht 21 mit dem Bauteil 2 verbunden. Alternativ kann das Bauteil 2 vollständige oder partiell mit einem Kunststoff befüllt sein, welcher mittels einer Haftschicht 21 an dem Bauteil 2 haftet. Die Haftschicht 21 ist alternativ vollflächig ausgestaltet (Fig. 1b). Das Hybridbauteil 1 ist alternativ mit einem Deckblech 31 abdeckbar, welches mittels einer Haftschicht 21' an dem Bauteil 2 angebracht ist (Fig. 1c).

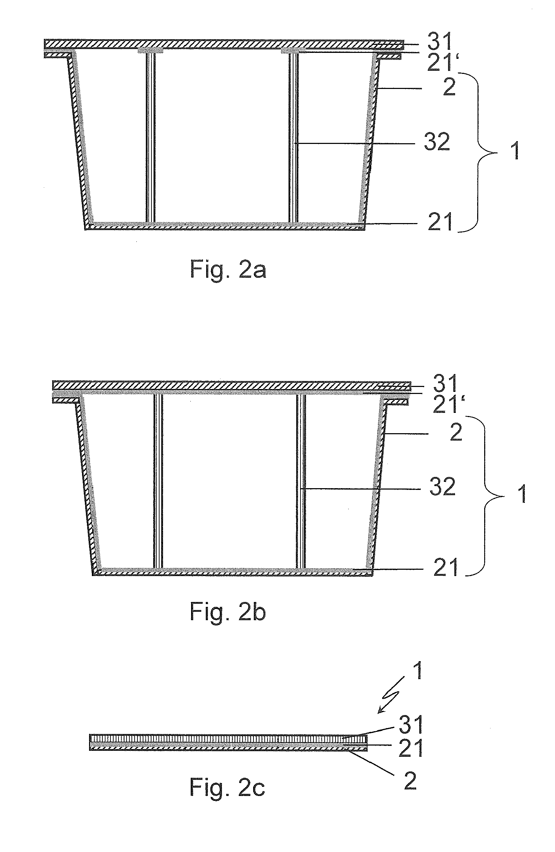

Figur 2 zeigt Hybridbauteile 1 umfassend ein Bauteil 2, eine Haftschicht 21, eine oder mehrere Kunststoffrippen 32, eine Haftschicht 21' und eine Deckblech 31. Das Bauteil 2 ist vollflächig mit der Haftschicht 21 beschichtet, und das Deckblech 31 ist in den Kontaktbereichen, welche auf den Kunststoffrippen 32 zu liegen kommen, mit der Haftschicht 21' beschichtet. (Fig. 2a). Alternativ ist das Deckblech 31 vollflächig mit der Haftschicht 21' beschichtet, so dass in den Aussenbereichen des Bauteils 2 die Haftschichten 21 und 21' aufeinander liegen.

Eine flächige Darstellung zeigt eine Hybridbauteil 1 umfassend ein Bauteil 2, eine Haftschicht 21 und ein Deckblech 31, welche aufeinander aufliegen (Fig. 2c). Alternativ ist das Bauteil 2 faserverstärkt. Dementsprechend müssen die vorgenannten Elemente nicht dreidimensional vorgeformt sein.

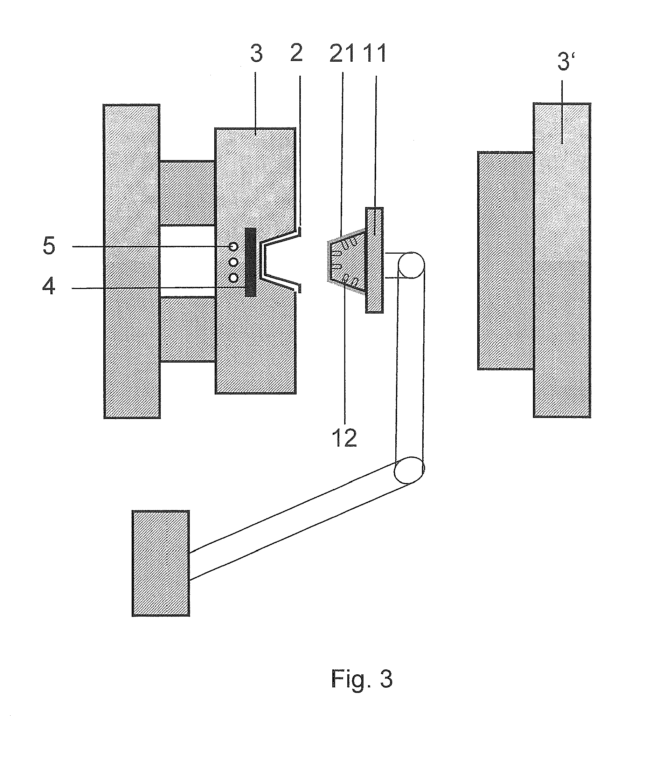

Figur 3 zeigt verschiedene Elemente zur Durchführung des erfindungsgemässen Verfahrens. Ein Bauteil 2 ist in eine Kavität eines Werkzeugs 3 eingelegt. Eine einstellbare Temperiervorrichtung, welche eine Heizeinheit 4 und eine Kühleinheit 5 umfasst, heizt das in der Kavität eingelegte Bauteil 2 auf eine definierte Temperatur. Ein Pressstempel 11 haftet eine Haftschicht 21 an. Der Pressstempel weist Vakuumbohrungen 12 auf, welche ein Ansaugen und Entlassen der Haftschicht 21 bewerkstelligen. Die Haftschicht 21 wird mittels Anpressen auf das Bauteil 2 überführt. Anschliessend verlässt der Pressstempel 11 das Werkzeug 3 und ein zweites Element des Werkzeugs 3', welches beispielsweise eine Spritzgiesseinrichtung aufweist, befüllt das beschichtete Bauteil 2 mit einem Kunststoff.

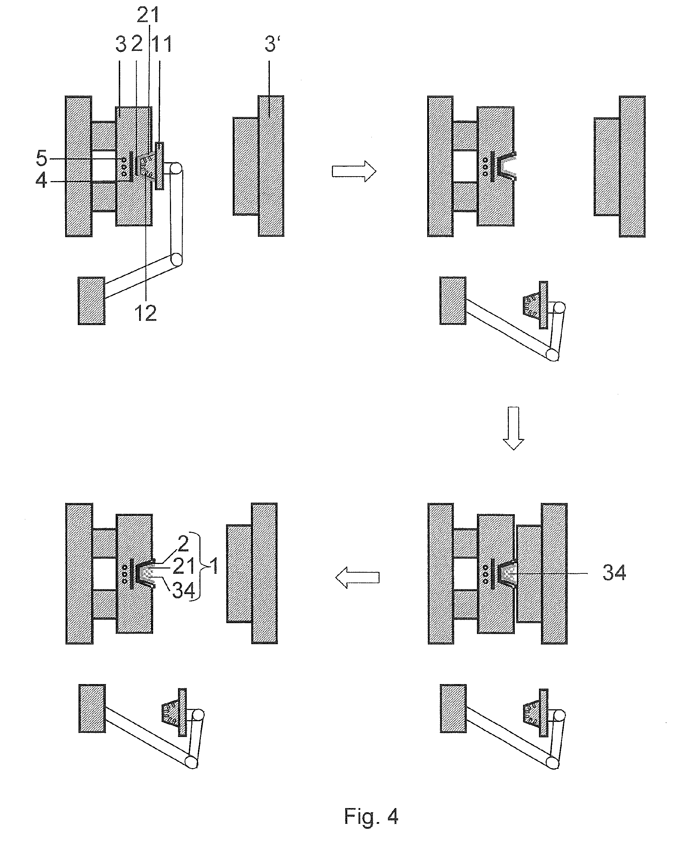

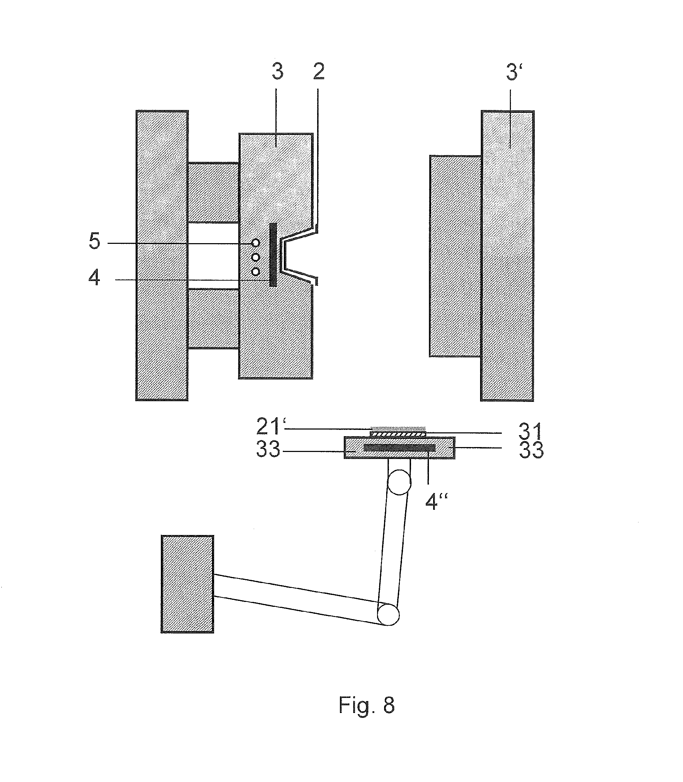

Figur 4 zeigt einen Transfer mittels Andrücken einer Haftschicht 21 vom Presstempel 11 unter Verwendung eines Unterdrucks vermittelt durch Vakuumbohrungen 12 auf eine mittels einer Temperiervorrichtung (Heizeinheit 4 und Kühleinheit 5) temperierten Bauteils 2. Der Pressstempel 11 verlässt das Werkzeug 3, ein zweites Element des Werkzeugs 3' schliesst das Werkzeug und bringt einen Kunststoff 34 in das beschichtete Bauteil 2 ein. Anschliessend öffnet das Werkzeug und das Hybridbauteil 1 kann aus dem Werkzeug 3, 3' entnommen werden. Alternativ kann das Hybridbauteil 1 vor Entnahmen mit einem Deckblech abgedeckt werden (vgl. Fig. 8, 9, 10).

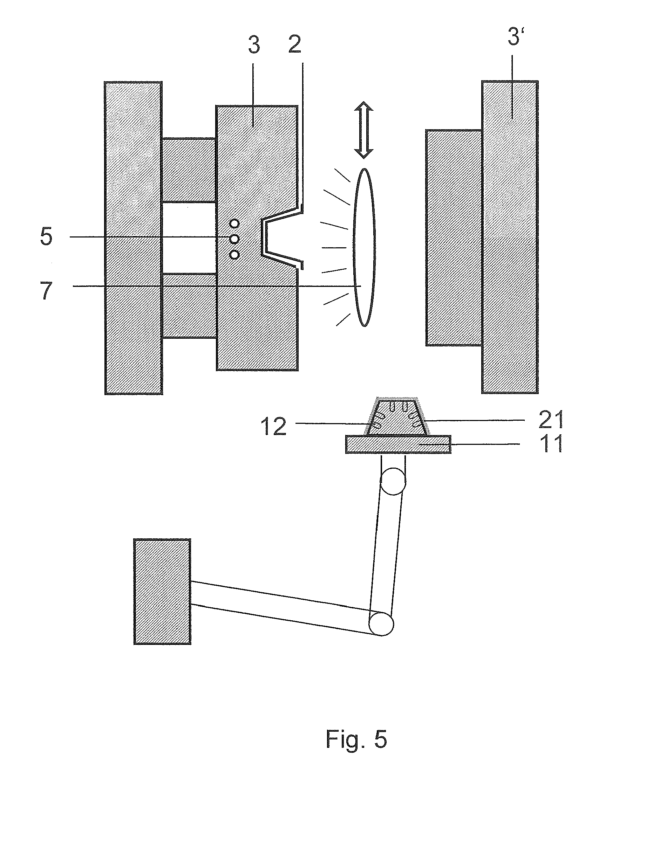

Die Figuren 5, 6 und 7 veranschaulichen alternative Möglichkeiten eines Energieeintrags auf das Bauteil 2. Eine bewegbare, externe Wärmequelle wird in das Werkzeug 3 bewegt und das Bauteil 2, welches sich in der Kavität des Werkzeugs 3 befindet, entsprechend erwärmt (Fig. 5). Eine Kühleinrichtung 5 ermöglicht ein anforderungsgemässes Anpassen der Temperatur im Werkzeug 3.

Alternativ ist ein zusätzliches Werkzeug mit einer Kavität bereitgestellt, in welches ein Bauteil 2 eingelegt ist (Fig. 6). Mittels einer Heizeinheit 4' wird das Bauteil 2 auf eine definierte Temperatur gebracht, ein mit einer Haftschicht 21 beschichteter Pressstempel 11 wird an das Bauteil 2 gepresst und ein oder mehrere Transferelemente 9 greifen das Bauteil 2, was ein Transfer des mit der Haftschicht 21 beschichtete Bauteil 2 in die Kavität des Werkzeugs 3 ermöglicht. Anschliessend entlassen die Transferwerkzeuge 9 das beschichtete Bauteil 2, Vakuumbohrungen 12 entlassen die Haftschicht 21 durch Reduktion eine angelegten Unterdrucks, der Pressstempel 11 verlässt das Werkzeug 3 und ein zweites Element des Werkzeugs 3', welches beispielsweise ein Spritzgiesswerkzeug aufweist, befüllt das beschichtete Bauteil 2 mit einem Kunststoff. Eine Kühleinrichtung 5 ermöglicht ein anforderungsgemässes Anpassen der Temperatur im Werkzeug 3.

Alternativ befindet sich das Bauteil 2 auf einem Schlitten 8 und wird in einer externen Heizvorrichtung 7, beispielsweise in einem externen Heizoffen auf eine definierte Temperatur gebracht (Fig. 7). Der Schlitten 8 bewegt sich aus der Heizvorrichtung 7, ein mit einer Haftschicht 21 beschichteter Pressstempel 11, was durch einen mittels der Vakuumbohrungen 12 angelegten Unterdruck vermittelt wird, wird an das Bauteil 2 gepresst und ein oder mehrere Transferelemente 9 greifen das Bauteil 2, was ein Transfer des mit der Haftschicht 21 beschichtete Bauteil 2 in die Kavität des Werkzeugs 3 ermöglicht. Anschliessend wird der angelegte Unterdruck zum Entlassen der Haftschicht 21 reduziert, die Transferwerkzeuge 9 entlassen das beschichtete Bauteil 2, der Pressstempel 11 verlässt das Werkzeug 3 und ein zweites Element des Werkzeugs 3', welches beispielsweise eine Spritzgiesseinheit aufweist, befüllt das beschichtete Bauteil 2 mit einem Kunststoff. Eine Kühleinrichtung 5 ermöglicht ein anforderungsgemässes Anpassen der Temperatur im Werkzeug 3.

Die Figuren 8, 9 und 10 veranschaulichen Elemente und Verfahrenschritte zum Abdecken eines Bauteils 2 mit einem mit einer Haftschicht 21' beschichteten Deckblech 31.

Dabei wird das beschichtete Deckblech 31 mit einer Transfervorrichtung 33 auf ein sich in der Kavität eines Werkzeugs 3 eingelegten Bauteils 2 angepresst und transferiert (Fig. 8). Ein Einstellen einer Temperatur im Werkzeug 3 erfolgt über die Heizeinheit 4 und Kühleinheit 5. Das Bauteil 2 weist eine Haftschicht 21' auf, und kann mit einem Kunststoff angefüllt sein und/oder eine oder mehrere Kunststoffrippen aufweisen (nicht gezeigt), welche mittels des Elements des Werkzeugs 3' eingetragen worden sind. Die Transfervorrichtung weist eine Heizeinheit 4" auf. Ebenso kann eine externe Wärmequelle vorgesehen sein )nicht gezeigt).

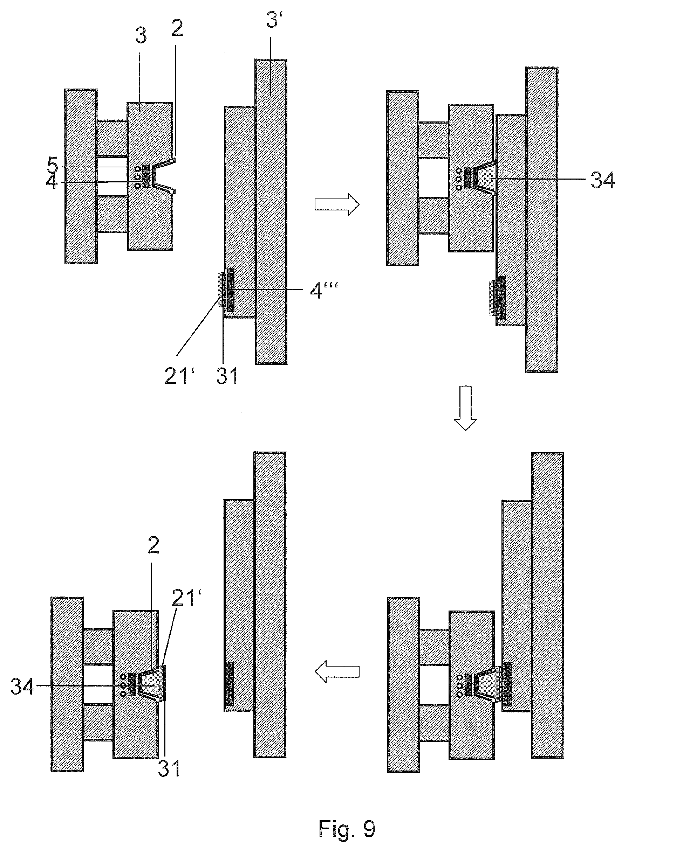

Alternativ weist das Werkzeug 3' zusätzlich eine Kontaktfläche für das mit der Haftschicht 21' beschichtete Deckblech 31 auf (Fig. 9). Die Temperatur im Werkzeug 3 ist mittels der Heizeinrichtung 4 und der Kühleinrichtung 5 einstellbar. Das Werkzeug 3' ist gegenüber dem Werkzeug 3 insbesondere lateral bewegbar, sodass zunächst das mit einer Haftschicht (nicht gezeigt) beschichtete Bauteil 2 mit einem Kunststoff 34 befüllt oder Kunststoffrippen eingebracht werden. Anschliessend wird das beschichtete Deckblech 31 auf das Bauteil 2 transferiert. Zusätzlich weist das Werkzeug 3' im Bereich der Kontaktfläche eine Heizeinheit 4''' auf. Alternativ kann auch eine externe Heizquelle vorgesehen sein (nicht gezeigt).

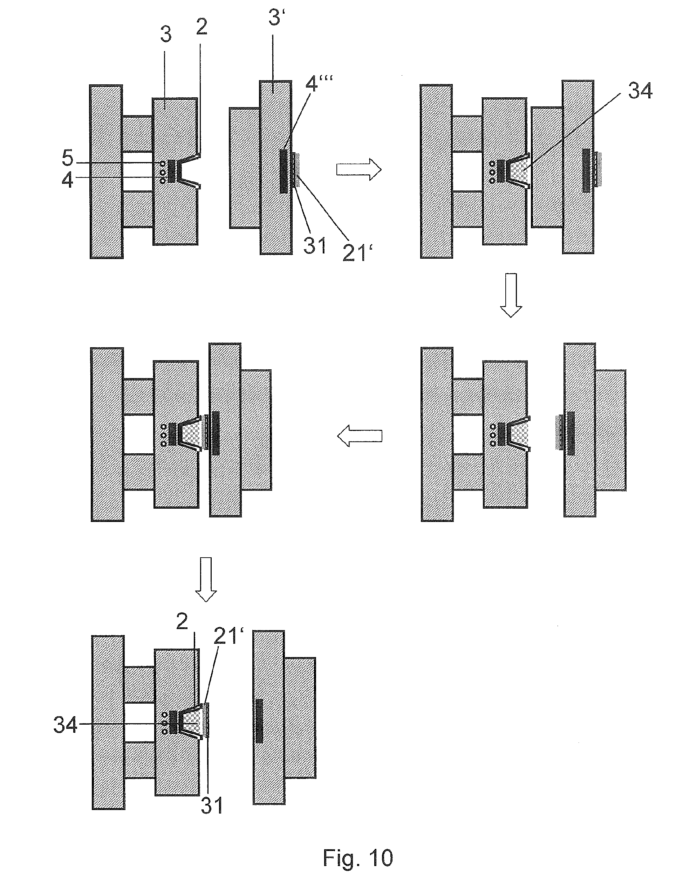

Alternativ ist das Werkzeug 3' als Wendeplatte ausgestaltet und weist eine Kontaktfläche für das mit der Haftschicht 21' beschichtete Deckblech 31 zur auf einer der Kavität des Werkzeugs 3 abgewandten Seit auf (Fig. 10). Die Temperatur im Werkzeug 3 ist mittels der Heizeinrichtung 4 und der Kühleinrichtung 5 einstellbar. Im Anschluss an das Einbringen eines Kunststoffs 34 insbesondere in Form von Kunststoffrippen in das beschichtete Bauteil 2 wird das Werkzeuge 3' derart ausgerichtet, dass das mit einer Haftschicht 21' beschichtete Deckblech 31 mit dem Bauteil 2 zur Deckung gebracht wird. Entsprechend erfolgt der Übertrag des Deckelblechs 31 auf das Bauteil 2. Zusätzlich weist das Werkzeug 3' im Bereich der Kontaktfläche ein Heizeinheit 4''' auf. Alternativ kann auch eine externe Heizquelle vorgesehen sein (nicht gezeigt).

## Patentansprüche

1. Verfahren zur Herstellung von Hybridbauteilen (1) umfassend die Schritte
- Bereitstellen eines insbesondere vorgeformten Bauteils (2), insbesondere Metallelements,
- Bereitstellen eines Werkzeugs (3, 3'), insbesondere eines Spritzgiesswerkzeugs,
- Bereitstellen mindestens einer Auftragseinheit (11), insbesondere eines Pressstempels,
- Bereitstellen mindestens einer Haftschicht (21), insbesondere einer Klebefolie, an der Auftragseinheit (11),
- Platzieren des insbesondere vorgeformten Bauteils (2) in das Werkzeug (3, 3'),
- Aufheizen des Werkzeugs (3, 3') insbesondere mittels einer Temperiervorrichtung oder Aufheizen des Bauteils (2) vor dem Platzieren in das Werkzeug (3, 3'),
- Andrücken der Haftschicht (21) auf das insbesondere vorgeformte Bauteil (2),
- Schliessen des Werkzeugs (3, 3'),
- Einbringen eines Kunststoffes, insbesondere einer oder mehrerer Kunststoffrippen 32 oder Kunststoffstreben, in das Werkzeug (3, 3'), insbesondere durch Spritzgiessen,
- Entnahme des Hybridbauteils (1) aus dem Werkzeug (3, 3').

2. Verfahren nach Anspruch 1 **dadurch gekennzeichnet, dass** die Haftschicht (21) als zweidimensionale Kontur des dreidimensionalen, insbesondere vorgeformten Bauelelements (2), insbesondere Metallelements, insbesondere mit mindestens einer oder mehreren Aussparungen, bereitgestellt wird.

3. Verfahren nach einem der Ansprüche 1 bis 2 **dadurch gekennzeichnet, dass** das insbesondere vorgeformte Bauteil (2) mittels Stanzen, Biegen, Formen und/oder Tiefziehen hergestellt wird.

4. Verfahren nach einem der Ansprüche 1 bis 3 **dadurch gekennzeichnet, dass** das insbesondere vorgeformte Bauteil (2) vorbehandelt, insbesondere entfettet wird.

5. Verfahren nach einem der Ansprüche 1 bis 4 **dadurch gekennzeichnet, dass** der Pressstempel (11) mindestens eine oder mehrere Vakuumbohrungen (12) aufweist, welche ein Ansaugen der Haftschicht (21) ermöglicht.

6. Verfahren nach einem der Ansprüche 1 bis 5 **dadurch gekennzeichnet, dass** ein Anhaften der Haftschicht (21) an dem insbesondere vorgeformten Bauteils (2) mittels temporärer Fixierung, insbesondere mittels elektrostatischer Anziehung oder einer Haftvorbeschichtung des insbesondere vorgeformten Bauteils (2), ermöglicht wird.

7. Verfahren nach einem der Ansprüche 1 bis 6 **dadurch gekennzeichnet, dass** während eines Einbringens des Kunststoffs 34 das Werkzeug (3), insbesondere mittels der Heizeinheit (4), temperiert, insbesondere auf eine definierte Temperatur eingestellt wird.

8. Verfahren nach einem der Ansprüche 1 bis 7 **dadurch gekennzeichnet, dass** das insbesondere vorgeformte Bauteil (2) und/oder die Haftschicht (21) vor dem Spritzgiessvorgang mittels Infrarot-Strahlung, Induktion oder Hochfrequenz-Strahlung aufgeheizt werden.

9. Verfahren nach einem der Ansprüche 1 bis 8 **dadurch gekennzeichnet, dass** die Haftschicht (21) ein- oder mehrschichtig, bevorzugt drei- oder fünfschichtig, ausgestaltet ist.

10. Verfahren nach einem der Ansprüche 1 bis 9 **dadurch gekennzeichnet, dass** die Haftschicht (21) insbesondere latent reaktive Gruppen aufweist.

11. Verfahren nach einem der Ansprüche 1 bis 10 **dadurch gekennzeichnet, dass** die Haftschicht (21) auf einem Transferträger (22) aufgetragen ist.

12. Verfahren nach einem der Ansprüche 1 bis 11 **dadurch gekennzeichnet, dass** die Haftschicht (21) eine Schichtdicke von 1 bis 2000 µm, bevorzugt von 5 bis 1000 µm, besonders bevorzugt von 10 bis 500 µm, aufweist.

13. Verfahren nach einem der Ansprüche 1 bis 12 **dadurch gekennzeichnet, dass** eine dem insbesondere vorgeformten Bauteil zugewandten Schicht der Haftschicht (21) gefertigt ist mit Stoffen ausgewählt aus der Liste umfassend: Polyolefin, insbesondere in Kombination mit Maleinsäureanhydrid; Polyamid, insbesondere in Kombination mit Phenol; Polyurethan, insbesondere latent reaktives Polyurethan; Phenolharz, Polyester, insbesondere Co-Polyester; Ethylenvinylacetat, Ethylen-Vinylalkohol, Ionomere, Acrylate, Silane, Epoxide.

14. Verfahren nach einem der Ansprüche 1 bis 13 **dadurch gekennzeichnet, dass** eine dem Pressstempel (11) zugewandte Schicht der Haftschicht (21) gefertigt ist aus Stoffen ausgewählt aus der Liste umfassend Polyolefin, insbesondere in Kombination mit Maleinsäureanhydrid; Polyamid, insbesondere in Kombination mit Phenol; thermoplatisches Polyurethan (TPU), Polybutylenterephthalat (PBT), Polyphthalamide (PPA), Polycarbonat (PC), Acrylnitril-Butadien-Styrol (ABS), Polyetheretherketon (PEEK), Polyoxymethylen (POM), Acrylester-Styrol-Acrylnitril (ASA), Styrol-Acrylnitril (SAN).

15. Verfahren nach einem der Ansprüche 1 bis 14 **dadurch gekennzeichnet, dass** eine dem insbesondere vorgeformten Bauteil (2) zugewandten Schicht der Haftschicht (21) eine derartige Haftung auf dem Bauteil (2) aufweist, dass die Haftschicht (21) mit einer Aufdruckzeit von 0,1 bis 60 sec, bevorzugt 0,1 bis 30 sec, besonders bevorzugt 0,1 bis 15 sec und mit einem Druck von 0,001 bis 100 bar, bevorzugt 0,001 bis 80 bar, besonders bevorzugt 0,001 bis 50 bar auf das Bauteil transferiert werden kann.

16. Verfahren nach einem der Ansprüche 1 bis 15 **dadurch gekennzeichnet, dass** das hinterspritzte Hybridbauteil (1) mit einem beschichteten Deckblech (31) abgedeckt, insbesondere stoff- und formschlüssig verbunden wird.

17. Verwendung eines Pressstempels (11) zum Aufbringen einer Haftschicht (21) auf ein Bauteil (2) in der Herstellung eines Hybridbauteils (1), insbesondere in einem Verfahren gemäss einem der Ansprüche 1 bis 16.

18. Verwendung einer Klebefolie zum Verbinden eines insbesondere spritzgegossenen Kunststoffes mit einem Bauteil (2) in der Herstellung eines Hybridbauteils (1), insbesondere in einem Verfahren gemäss einem der Ansprüche 1 bis 16.
